# FASCICULE DE BREVET EUROPEEN

(11) **EP 1 982 585 B1**
(45) Date de publication et mention de la délivrance du brevet: **25.08.2010**
(21) Numéro de dépôt: 08103473.8
(22) Date de dépôt: 10.04.2008
(51) Int. Cl.: A01K 5/00

(54) **Machine agricole pour la distribution de produits**
Landmaschine zum Verteilen von Produkten
Agricultural machine for distribution of products

(30) Priorité: 19.04.2007 FR 0754569
(43) Date de publication de la demande: 22.10.2008
(73) Titulaire: Kuhn-Audureau S.A., 85260 La Copechagnière (FR)
(72) Inventeur: Remaud, Benoît, 85600, Saint Georges de Montaigu (FR)
(74) Mandataire: Andres, Jean-Claude

(56) Documents cités:
- EP-A- 0 930 005
- US-A- 5 622 323
- US-A- 5 803 375

## Description

L'invention concerne une machine agricole pour la distribution de produits, principalement fibreux, comportant un bâti portant une cuve dans laquelle se situe au moins une vis et présentant au moins une ouverture munie d'une porte pouvant coulisser verticalement, laquelle ouverture est utilisée pour l'évacuation des produits contenus dans la cuve vers un moyen de convoyage en vue de leur distribution ou de leur épandage, laquelle machine possède un outil démêleur pouvant être positionné par rapport à ladite ouverture.

Afin d'étendre de la paille dans les étables ou dans le but de distribuer de la nourriture à des animaux, il est employé des machines associant une cuve de mélange, une bande transporteuse et une soufflerie pour distribuer ces produits.

Une telle machine comporte notamment une cuve dans laquelle est introduite par le haut la paille ou le fourrage à distribuer, cette cuve comportant une ou plusieurs vis de manière à défaire les balles introduites et mélanger les composants à distribuer.

Les vis peuvent être par exemple des vis sans fin montées verticalement et actionnées en rotation dans le sens choisi pour pousser la matière à distribuer vers une porte de sortie placée sur un côté ou vers l'avant de la cuve.

A la sortie de la cuve les produits initialement en balles sont défaits, toutefois il reste de manière récurrente des amas mal dispersés. Pour défaire ces amas il a été trouvé avantageux de placer en sortie de cuve, avant le convoyage des produits vers le dispositif de distribution ou d'épandage, un outil démêleur.

L'outil démêleur se présente sous la forme d'un rouleau portant des pales, des dents ou tous autres dispositifs capables de défaire les amas.

L'outil démêleur, idéalement placé en sortie de cuve, est difficile à positionner en raison du fait qu'il ne peut pas être trop éloigné de la porte de sortie des produits sinon il risque de perdre son efficacité et placé totalement dans la cuve il perturberait l'opération consistant à défaire les balles et mélanger les produits.

Le brevet EP 754 405 décrit un tel dispositif de démêlage de produits fibreux destinés à des animaux. Ce document présente un ensemble démêleur monté sur le châssis d'une remorque portant une cuve de mélange avec une vis sans fin, lequel ensemble démêleur est constitué par un rouleau porteur de tiges pour le brassage du fourrage et qui est déplaçable vers l'ouverture de sortie du fourrage au moyen d'un vérin hydraulique, lorsque la porte est ouverte.

Le mécanisme de positionnement du démêleur décrit dans ce brevet EP 754 405 présente plusieurs inconvénients importants :
- le démêleur est solidaire du châssis et décalé de la cuve, ce qui allonge la remorque et engendre des coûts de réalisation de l'appareillage élevés,
- le déplacement de l'ensemble démêleur vers l'ouverture de la cuve ne doit être réalisé que lorsque la porte est ouverte, ce qui entraîne un problème de sécurité important en cas de confusion des commandes de la part de l'opérateur, notamment si l'ensemble démêleur est déplacé alors que la porte est fermée ou lorsque la porte est refermée alors que le démêleur est positionné dans l'ouverture.

L'invention a donc pour objectif de résoudre ces principales difficultés en proposant un dispositif couplant le mécanisme d'ouverture de la porte et le mouvement du démêleur entre une position de fonctionnement et entre une position escamotée.

A cet effet, la présente invention consiste en ce que l'outil démêleur est relié à la porte par un moyen de liaison asservissant le déplacement de l'outil démêleur à celui de la porte en ouverture ou en fermeture.

Les avantages de ce dispositif de positionnement de l'outil démêleur dans une ouverture munie d'une porte sont multiples :
- la sécurité du matériel est garantie par le dispositif lui-même, il n'est pas possible, comme cela se rencontre sur le matériel existant connu, que la porte se referme sur l'outil démêleur, ou que l'outil démêleur heurte la porte fermée, en raison d'une mauvaise manoeuvre. Il n'y a donc pas d'interférence possible entre la porte et l'outil démêleur,
- l'ensemble du dispositif est fixé sur la cuve de la matière à traiter et à répartir, ce qui permet l'obtention d'une machine plus légère, plus compacte et donc globalement moins onéreuse,
- le dispositif selon l'invention n'est pas exclusivement applicable au domaine agricole et peut être transposé dans d'autres secteurs pour répondre à la problématique générale de désagréger un produit amalgamé,
- le dispositif de positionnement avec son mécanisme de liaison est à la fois simple et efficace, l'articulation est totalement mécanique sans fonction hydraulique, ce qui entraîne un entretien réduit,
- la forme de l'outil démêleur, notamment lorsqu'il s'agit d'un rouleau démêleur dans le domaine agricole, est adaptée à celle de la cuve et à la forme de la vis à l'intérieur de celle-ci, cela évite les détériorations lorsqu'un noyau de paille passe entre la vis et le démêleur, cette forme spécifique permet également d'avoir une bonne régularité dans l'approvisionnement du produit sur la bande transporteuse, le démêleur délivrant sensiblement la même quantité de produit sur toute sa largeur.

D'autres caractéristiques et avantages de l'invention se dégageront de la description qui va suivre en regard des dessins annexés qui ne sont donnés qu'à titre d'exemples non limitatifs.
La figure 1 est une vue d'ensemble de profil d'une machine agricole selon l'invention.
La figure 2 est une vue de côté du dispositif de positionnement de l'outil démêleur en position escamotée, lorsque la porte est fermée.
La figure 3 est une vue de côté du dispositif de positionnement de l'outil démêleur en position de fonctionnement, lorsque la porte est ouverte.
La figure 4 est une vue de détail du moyen de liaison asservissant le déplacement de l'outil tubulaire à celui de la porte en ouverture ou en fermeture.
La figure 5 illustre en vue de dessus le positionnement et la forme de l'outil démêleur dans l'ouverture de la cuve, en position de fonctionnement, la porte étant ouverte.

L'invention a trait à une machine agricole possédant un dispositif de positionnement d'un outil démêleur dans une ouverture munie d'une porte coulissante, l'outil démêleur étant avantageusement un rouleau démêleur et la porte étant utilisée pour l'évacuation de paille ou de mélanges principalement fibreux contenus dans une cuve vers un moyen de convoyage, de distribution ou d'épandage.

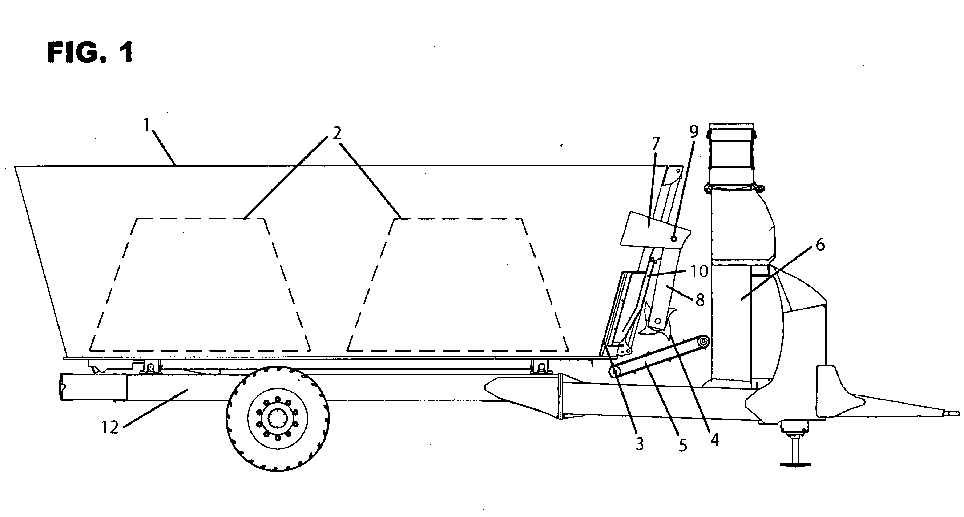

Une telle machine agricole illustrée sur la figure 1 comprend les éléments essentiels suivants :
- un bâti 12 portant une cuve 1 destinée à recevoir les matériaux sous forme de balles,
- deux vis sans fin 2 disposées verticalement à l'intérieur de la cuve 1 et permettant l'éclatement des balles de fourrage ou de paille,
- une porte 3 pour l'évacuation de la matière et coulissant verticalement entre deux positions extrêmes correspondant à l'ouverture complète et à la fermeture d'une ouverture 13 dans la paroi de la cuve 1,
- un outil démêleur 4 permettant de désagréger les amas fibreux non défaits,
- une bande transporteuse 5 permettant l'acheminement des fibres vers une soufflerie 6 chargée de distribuer le fourrage ou la paille.

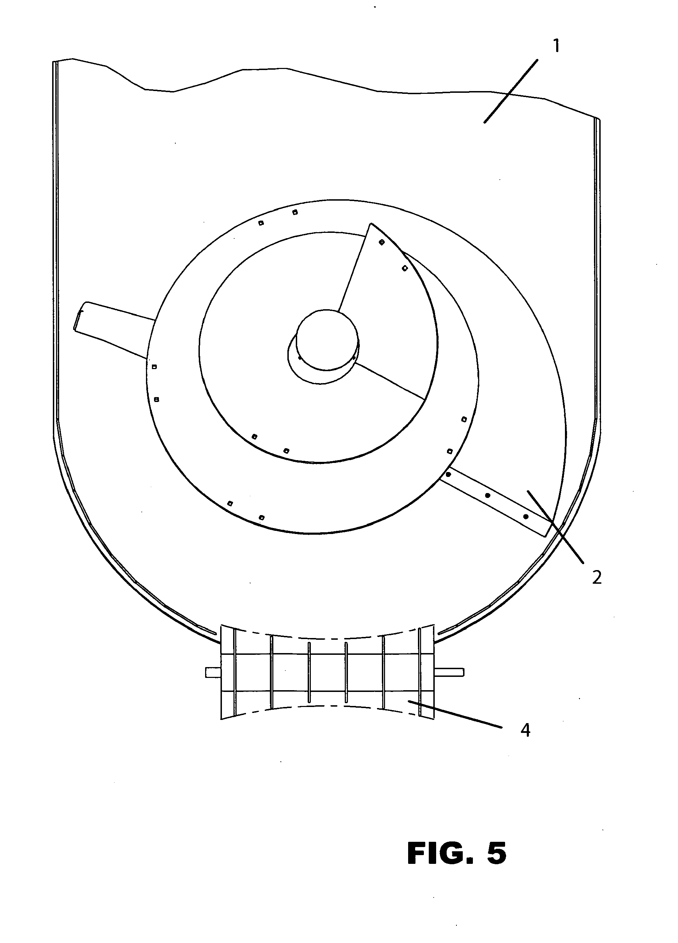

Ainsi selon cet exemple avantageux de réalisation, les matériaux fibreux sont traités par deux vis sans fin 2 disposées verticalement afin de défaire les balles, ce type de vis étant représenté en vue de dessus dans la figure 5. Les éléments fibreux, par exemple de la paille, sont ensuite travaillés par le rouleau démêleur 4 à la sortie de la cuve 1 et déposés sur la bande transporteuse 5 pour être acheminés vers une soufflerie 6 permettant l'envoi de la matière vers des mangeoires d'animaux dans le cas où il s'agit de fourrage ou vers les stalles où se tiennent les animaux lorsqu'il s'agit de paille.

Selon l'invention l'outil démêleur 4 est porté par la cuve 1 grâce à une potence 7, laquelle potence 7 est reliée à un bras 8 porteur de l'outil démêleur 4 tel qu'un rouleau, par l'intermédiaire d'une articulation avec un axe 9. L'articulation en elle-même est un dispositif connu permettant un mouvement limité de rotation du bras 8 autour de l'axe 9.

Le bras 8 est articulé avec la potence et porte dans sa partie supérieure proche de la cuve un galet 11 qui peut coulisser dans une rampe 10. La rampe 10 se présente avantageusement sous la forme d'un rail solidaire de la porte 3 et dans lequel le galet 11 est guidé au cours de son déplacement.

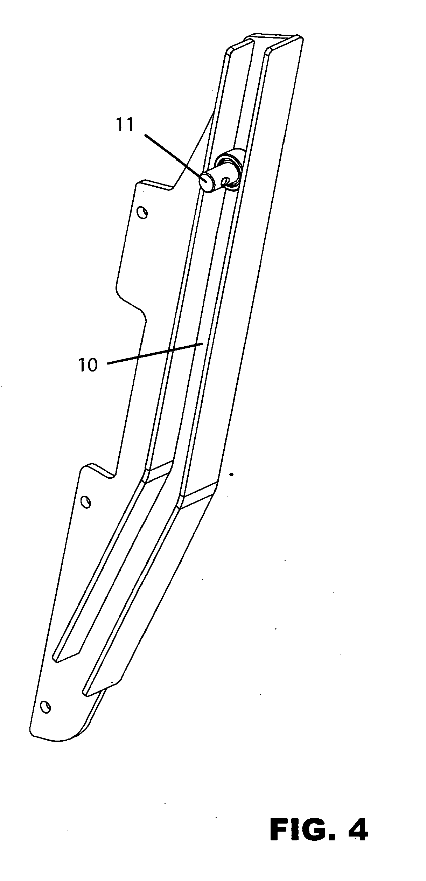

Selon l'invention le moyen de liaison permettant l'asservissement de l'outil démêleur 4 au mouvement de la porte 3 est constitué par au moins une rampe 10 solidaire de la porte 3 et par au moins un galet 11 pouvant coulisser dans ladite rampe, lequel galet 11 est porté par le bras 8 support du rouleau démêleur 4. La figure 4 illustre en détail le mouvement possible du galet 11 dans la rampe 10.

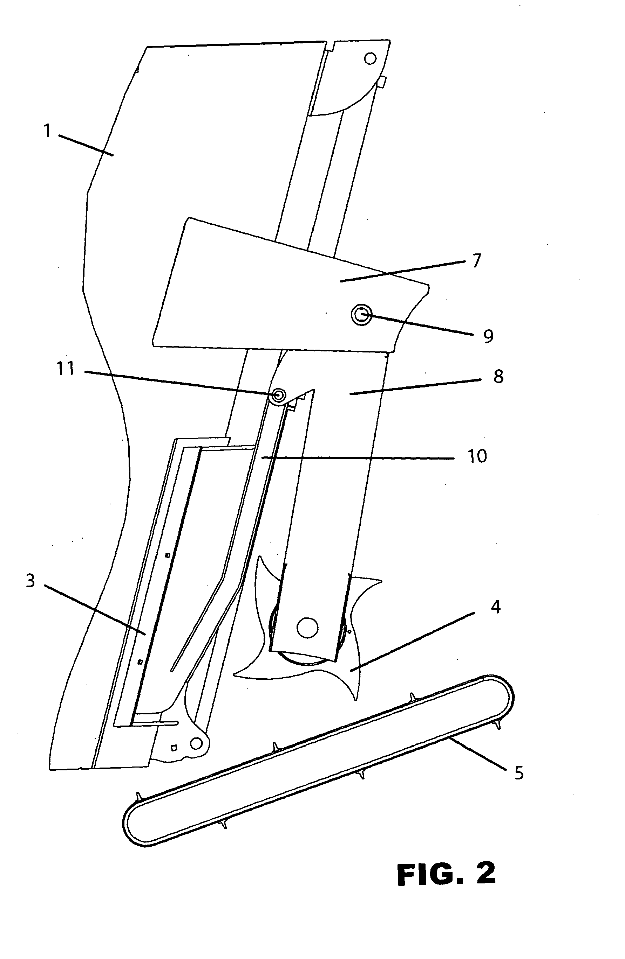

Tel que cela est illustré sur les figures 2, 3 et 4 l'orientation de la rampe 10 détermine le mouvement et le déplacement possible du rouleau démêleur 4.

Avantageusement selon l'invention la rampe 10 est incurvée en direction de la cuve 1 dans sa partie basse de manière à ce que le rouleau démêleur 4 soit placé sensiblement dans l'ouverture 13 de la cuve 1 lorsque la porte 3 est en position relevée d'ouverture.

La figure 2 montre la position du rouleau démêleur 4 lorsque la porte est fermée. Dans cette configuration le rouleau démêleur 4 est placé en position escamotée, c'est-à-dire en retrait de l'ouverture 13. L'abaissement de la porte 3 a pour effet de déplacer le rouleau démêleur 4 en rotation autour de l'axe 9 porté par la potence, laquelle potence 7 est solidaire de la cuve 1. Dans cette position, les vis 2 peuvent défaire les balles et mélanger les produits.

Dans la configuration de fermeture de la porte 3 le galet 11 se situe au sommet de la rampe 10 tel que cela est représenté sur la figure 2.

La descente de la porte 3 a pour effet d'entraîner dans son mouvement la rampe 10 qui lui est solidairement rattachée, le galet 11 relié au bras 8 coulisse alors dans ladite rampe 10 et provoque l'éloignement de l'ensemble rouleau démêleur 4 et du bras 8 de l'ouverture 13, ce mouvement d'éloignement étant dû au fait que le bras 8 est relié à la potence 7 par l'intermédiaire de l'articulation comportant l'axe 9.

La remontée de la porte 3 conduit au coulissement en sens contraire du galet 11 dans la rampe 10, la forme de la partie inférieure de la rampe 10 provoque le déplacement en rotation de l'ensemble bras 8 et rouleau démêleur 4 pour rapprocher le rouleau 4 de la cuve 1 et le positionner dans l'ouverture 13 lorsque la porte 3 est complètement relevée. Les déplacements de la porte 3 peuvent par exemple être effectués au moyen d'un vérin hydraulique.

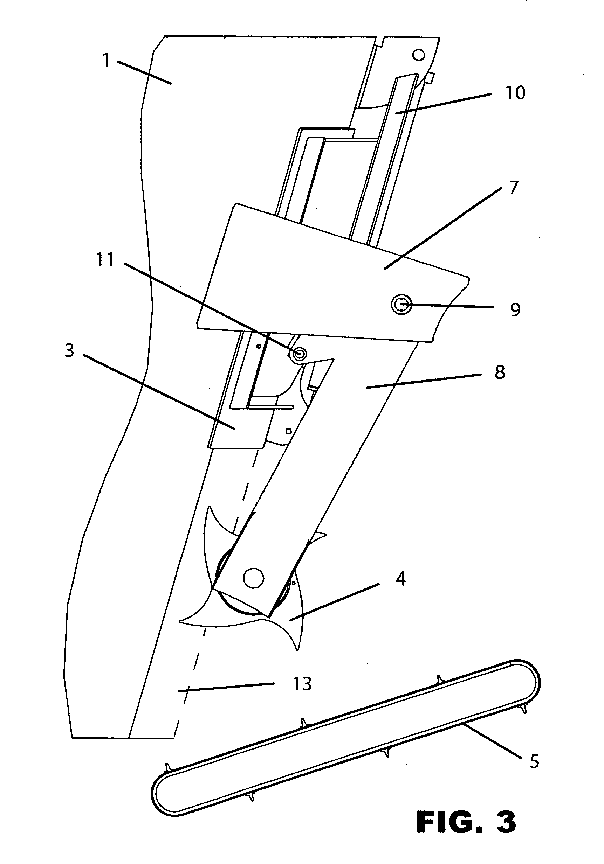

Dans la configuration d'ouverture, le galet 11 se situe dans le bas de la rampe 10, tel que cela est représenté dans la figure 3.

Selon l'invention, l'amplitude du mouvement de rotation du rouleau démêleur 4 et son positionnement dans les deux configurations extrêmes d'ouverture et de fermeture est déterminé par :
- la longueur de la potence 7 et le positionnement de l'axe 9,
- la longueur du bras 8 et la localisation du galet 11 sur celui-ci,
- l'orientation de la rampe 10 et sa position par rapport à la cuve.

Par ailleurs, selon l'invention, il est avantageux que l'outil démêleur 4 ait un profil incurvé adapté à la forme de la cuve 1 et de la vis 2 et occupe sensiblement la largeur de la porte 3 en position de fonctionnement, de manière à ce que dans cette configuration le rouleau 4 ait une efficacité maximale pour défaire les amas fibreux au passage de l'ouverture 13.

La figure 5 montre en vue de dessus la cuve 1 avec la vis 2 utile pour défaire les balles de produits fibreux et le rouleau démêleur 4 qui a un diamètre réduit en son centre par rapport à ses extrémités de manière à épouser la forme externe de la cuve et de la vis 2. Le rouleau démêleur 4 selon l'invention assure une bonne répartition du fourrage sur toute sa largeur, le tapis de convoyage 5 reçoit ainsi une matière uniformément répartie favorable à une distribution ultérieure correcte.

Le dispositif de positionnement selon l'invention présente une sécurité mécanique importante en fonctionnement en raison de sa conception. Outre le fait que la porte 3 et le positionnement du rouleau 4 sont asservis mécaniquement, ce qui représente la sécurité principale amenée par le dispositif, lorsqu'un noyau fibreux résistant au démêlage passe vers le rouleau 4 il ne se coince pas entre ce dernier et la vis 2. Ce noyau peut ainsi passer sans dégrader le matériel.

Plusieurs variantes du dispositif de positionnement de l'outil démêleur 4 selon l'invention sont possibles, il peut être envisagé différents moyens de liaison permettant le déplacement conjoint du rouleau démêleur 4 et de la porte 3, par exemple en remplacement de la rampe 10 en forme de rail il pourrait être employé une lumière dans une tôle. Il peut aussi être envisagé divers moyens d'articulation entre la potence 7 et le bras 8.

Il peut aussi être imaginé de placer les moyens de liaison reliant l'outil démêleur 4 et la porte 3 sur les deux côtés de la porte 3 ou sur une fixation centrale et les pièces peuvent être articulées entre elles de différentes manières.

L'outil démêleur 4 est avantageusement un démêleur employé pour défaire des amas de plantes et matériaux fibreux dans le domaine agricole, il est toutefois envisageable d'utiliser le dispositif dans d'autres domaines et avec des matériaux différents, par exemple pour défaire les mottes agrégées de produits granuleux ou de poudres, en employant un outil adapté. Le positionnement dudit outil avec la porte de décharge des produits pourrait tout à fait employer le dispositif de positionnement précédemment décrit.

Bien entendu, l'invention n'est pas limitée aux modes de réalisation décrits et représentés à titre d'exemples, mais elle comprend aussi tous les équivalents techniques ainsi que leurs combinaisons sans sortir du cadre de l'invention tel que défini par les revendications.

## Revendications

1. Machine agricole pour la distribution de produits, principalement fibreux, comportant notamment un bâti (12) portant une cuve (1) dans laquelle se situe au moins une vis (2) et présentant au moins une ouverture (13) munie d'une porte (3) pouvant coulisser verticalement, laquelle ouverture (13) est utilisée pour l'évacuation des produits, contenus dans la cuve (1), vers un moyen de convoyage (5) en vue de leur distribution ou de leur épandage, laquelle machine possède un outil démêleur (4) pouvant être positionné par rapport à ladite ouverture (13), ***caractérisée en ce que*** l'outil démêleur (4) est relié à la porte (3) par un moyen de liaison asservissant le déplacement de l'outil démêleur (4) à celui de la porte (3) en ouverture ou en fermeture.

2. Machine agricole selon la revendication 1, ***caractérisée en ce que*** l'outil démêleur (4) est porté par la cuve (1) grâce à une potence (7).

3. Machine agricole selon la revendication 2, ***caractérisée en ce que*** l'outil démêleur (4) est un rouleau démêleur.

4. Machine agricole selon la revendication 1, ***caractérisée en ce que*** le moyen de liaison est constitué par au moins une rampe (10) solidaire de la porte (3) et par au moins un galet (11) pouvant coulisser dans ladite rampe (10), lequel galet (11) est porté par un bras (8) support du rouleau démêleur (4).

5. Machine agricole selon la revendication 4, ***caractérisée en ce que*** le bras (8) est articulé avec la potence (7), lequel bras (8) porte dans sa partie supérieure et proche de la cuve (1) le galet (11) pouvant coulisser dans là rampe (10).

6. Machine agricole selon la revendication 5, ***caractérisée en ce que*** l'orientation de la rampe (10) détermine le mouvement et le déplacement possible du rouleau démêleur (4).

7. Machine agricole selon la revendication 6, ***caractérisée en ce que*** la rampe (10) est incurvée en direction de la cuve (1) dans sa partie basse de manière à ce que le rouleau démêleur (4) soit placé sensiblement dans l'ouverture de la cuve (1) lorsque la porte (3) est en position relevée d'ouverture.

8. Machine agricole selon la revendication 6, ***caractérisée en ce que*** le rouleau démêleur (4) est placé en position escamotée, c'est-à-dire en retrait de l'ouverture (13) lorsque la porte (3) est en position refermée.

9. Machine agricole selon l'une quelconque des revendications précédentes, ***caractérisée en ce que*** le déplacement de la porte (3) a pour effet de déplacer le rouleau démêleur (4) en rotation partielle autour d'un axe d'articulation (9) porté par la potence (7).

10. Machine agricole selon l'une quelconque des revendications 1 à 9, ***caractérisée en ce que*** l'outil démêleur (4) a un profil adapté à la forme de la clive (1).

11. Machine agricole selon l'une quelconque des revendications précédentes, ***caractérisée en ce que*** l'outil démêleur (4) occupe sensiblement la largeur de la porte (3) en position de fonctionnement.

## Claims

1. Agricultural machine for the distribution of principally fibrous products, comprising in particular a frame (12) carrying a tank (1) in which there is located at least one auger (2) and having at least one opening (13) provided with a door (3), able to slide vertically, which opening (13) is used for the evacuation of the products contained in the tank (1) towards a conveying means (5) with the view to their distribution or their spreading, which machine has an unravelling tool (4) being able to be positioned with respect to the said opening (13), ***characterized in that*** the unravelling tool (4) is connected to the door (3) by a connecting means slaving the displacement of the unravelling tool (4) to that of the door (3), in opening or in closure.

2. Agricultural machine according to Claim 1, ***characterized in that*** the unravelling tool (4) is carried by the tank (1) owing to a bracket (7).

3. Agricultural machine according to Claim 2, ***characterized in that*** the unravelling tool (4) is a unravelling roll.

4. Agricultural machine according to Claim 1, ***characterized in that*** the connecting means is constituted by at least one slope (10) rigidly fastened to the door (3) and by at least one roller (11) which is able to slide in the said ramp (10), which roller (11) is carried by a support arm (8) of the unravelling roll (4).

5. Agricultural machine according to Claim 4, ***characterized in that*** the arm (8) is articulated with the bracket (7), which arm (8) carries in its upper part and close to the tank (1) the roller (11) which is able to slide in the ramp (10).

6. Agricultural machine according to Claim 5, ***characterized in that*** the orientation of the ramp (10) determines the movement and the possible displacement of the unravelling roll (4).

7. Agricultural machine according to Claim 6, ***characterized in that*** the ramp (10) is curved in the direction of the tank (1) in its lower part such that the unravelling roll (4) is placed substantially in the opening of the tank (1) when the door (3) is in the raised open position.

8. Agricultural machine according to Claim 6, ***characterized in that*** the unravelling roll (4) is placed in the retracted position, i.e. withdrawn from the opening (13) when the door (3) is in reclosed position.

9. Agricultural machine according to any of the preceding claims, ***characterized in that*** the displacement of the door (3) has the effect of moving the unravelling roll (4) in partial rotation about an articulation axis (9) carried by the bracket (7).

10. Agricultural machine according to any of Claims 1 to 9, ***characterized in that*** the unravelling tool (4) has a profile adapted to the shape of the tank (1).

11. Agricultural machine according to any of the preceding claims, ***characterized in that*** the unravelling tool (4) occupies substantially the width of the door (3) in functioning position.

## Patentansprüche

1. Landmaschine zum Verteilen von hauptsächlich faserigen Produkten, die insbesondere einen Rahmen (12) umfasst, der ein Behälter (1) trägt, in dem sich mindestens eine Mischschnecke (2) befindet und der mindestens eine Öffnung (13) aufweist, die mit einer Tür (3) versehen ist, die vertikal gleiten kann, wobei die Öffnung (13) für die Ableitung der in dem Behälter (1) enthaltenen Produkte zu einem Fördermittel (5) im Hinblick auf ihre Verteilung oder Ausbreitung verwendet wird, wobei die Maschine ein Lockerungswerkzeug (4) besitzt, das in Bezug zur Öffnung (13) angeordnet werden kann, ***dadurch gekennzeichnet, dass*** das Lockerungswerkzeug (4) mit der Tür (3) durch ein Verbindungsmittel verbunden ist, das die Bewegung des Lockerungswerkzeugs (4) zu jener der Tür (3) hinsichtlich des Öffnens oder Schließens steuert.

2. Landmaschine nach Anspruch 1, ***dadurch gekennzeichnet, dass*** das Lockerungswerkzeug (4) von dem Behälter (1) mittels eines Trägers (7) getragen wird.

3. Landmaschine nach Anspruch 2, ***dadurch gekennzeichnet, dass*** das Lockerungswerkzeug (4) eine Lockerungswalze ist.

4. Landmaschine nach Anspruch 1, ***dadurch gekennzeichnet, dass*** das Verbindungsmittel von mindestens einer Rampe (10), die mit der Tür (3) starr verbunden ist, und mindestens einer Rolle (11), die in der Rampe (10) gleiten kann, gebildet ist, wobei die Rolle (11) von einem Stützarm (8) der Lockerungswalze (4) getragen wird.

5. Landmaschine nach Anspruch 4, ***dadurch gekennzeichnet, dass*** der Arm (8) an den Träger (7) angelenkt ist, wobei der Arm (8) in seinem oberen Teil und nahe des Behälters (1) die Rolle (11) trägt, die in der Rampe (10) gleiten kann.

6. Landmaschine nach Anspruch 5, ***dadurch gekennzeichnet, dass*** die Ausrichtung der Rampe (10) die mögliche Bewegung und Verschiebung der Lockerungswalze (4) bestimmt.

7. Landmaschine nach Anspruch 6, ***dadurch gekennzeichnet, dass*** die Rampe (10) in Richtung des Behälters (1) in ihrem unteren Teil gekrümmt ist, so dass die Lockerungswalze (4) im Wesentlichen in der Öffnung des Behälters (1) angeordnet ist, wenn sich die Tür (3) in der angehobenen Öffnungsposition befindet.

8. Landmaschine nach Anspruch 6, ***dadurch gekennzeichnet, dass*** die Lockerungswalze (4) in zurückgezogener Position angeordnet ist, d.h. von der Öffnung (13) zurückgesetzt, wenn sich die Tür (3) wieder in der geschlossenen Position befindet.

9. Landmaschine nach irgend einem der vorhergehenden Ansprüche, ***dadurch gekennzeichnet,* dass** die Verschiebung der Tür (3) bewirkt, dass die Lockerungswalze (4) in teilweiser Drehung um eine vom Träger (7) getragene Gelenkachse (9) verschoben wird.

10. Landmaschine nach irgend einem der Ansprüche 1 bis 9, ***dadurch gekennzeichnet, dass*** die Lockerungswalze (4) ein an die Form des Behälters (1) angepasstes Profil hat.

11. Landmaschine nach irgend einem der vorhergehenden Ansprüche, ***dadurch gekennzeichnet, dass*** das Lockerungswerkzeug (4) im Wesentlichen die Breite der Tür (3) in Betriebsposition einnimmt.
